(19) Europäisches Patentamt
European Patent Office
Office européen des brevets

(11) **EP 1 945 483 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(21) Anmeldenummer: **06806815.4**

(22) Anmeldetag: **26.09.2006**

(51) Int Cl.:
***B60R 21/0132*** *(2006.01)*

(86) Internationale Anmeldenummer:
**PCT/EP2006/066723**

(87) Internationale Veröffentlichungsnummer:
**WO 2007/051672 (10.05.2007 Gazette 2007/19)**

(54) **VERFAHREN UND VORRICHTUNG ZUR WANKWINKELBESTIMMUNG FÜR INSASSENSCHUTZVORRICHTUNGEN**

METHOD AND APPARATUS FOR DETEMRINING A ROLL ANGLE FOR OCCUPANT PROTECTION APPARATUSES

PROCÉDÉ ET DISPOSITIF DE DÉTERMINATION DE L'ANGLE DE ROULIS POUR DISPOSITIFS DE PROTECTION DES PASSAGERS

(84) Benannte Vertragsstaaten:
**DE ES FR GB IT**

(30) Priorität: **02.11.2005 DE 102005052251**

(43) Veröffentlichungstag der Anmeldung:
**23.07.2008 Patentblatt 2008/30**

(73) Patentinhaber: **ROBERT BOSCH GMBH**
**70442 Stuttgart (DE)**

(72) Erfinder:
• **GOLOMBECK, Marc-Andre**
**70839 Gerlingen (DE)**
• **SCHAEFERS, Andreas**
**71282 Hemmingen (DE)**

(56) Entgegenhaltungen:
**EP-A2- 1 270 337**          **WO-A-03/026933**
**DE-A1- 19 744 083**        **DE-A1- 19 814 154**
**DE-A1- 19 962 687**        **US-B1- 6 192 305**

**Beschreibung**

Stand der Technik

Die Erfindung geht aus von einem Verfahren zur Wankwinkelbestimmung für Insassenschutzvorrichtungen nach der Gattung des unabhängigen Patentanspruchs 1 und von einer zugehörigen Vorrichtung.

Zahlen aus den USA belegen die Bedeutung der passiven Sicherheit bei Fahrzeugüberschlägen. Im Jahr 1998 war die Hälfte aller tödlichen Einzelfahrzeugunfälle auf einen Überschlag zurückzuführen. Im gesamten Unfallgeschehen nimmt der Fahrzeugüberschlag einen Anteil von rund 20 Prozent ein.

Herkömmliche Systeme zur Überschlagserkennung betrachten die Wankbewegung und die Beschleunigungen in x-, y- und z-Richtung des Fahrzeugs. Auf dieser Basis ist eine sichere Erkennung eines Fahrzeugüberschlags möglich, wobei die Entscheidung, ob ein Überschlag vorliegt, jedoch erst zu einem späten Zeitpunkt des Überschlags sicher getroffen wird. Bei bestimmten Fällen von Fahrzeugüberschlägen, welchen ein fahrdynamisches Manöver vorausgeht, erfährt der Insasse hohe laterale Beschleunigungen. Derartige Manöver können beispielsweise zu so genannten Soil-Trip-Überschlägen führen. Diesbezüglich besteht hinsichtlich des Auslöseverhaltens noch Potential für zukünftige Insassenschutzsysteme.

Bekannte Verfahren beruhen beispielsweise auf der Auswertung eines Drehratensensors und zwei Beschleunigungssensoren, welche in einem zentralen Airbagsteuergerät integriert sind. Der Drehratensensor ermittelt nach dem Kreiselprinzip die Rotationsgeschwindigkeit um die Fahrzeuglängsachse und die Beschleunigungssensoren messen zusätzlich die Fahrzeugbeschleunigung in Quer- und Hochrichtung. Im Hauptalgorithmus wird dann die Drehrate ausgewertet. Mit den Messwerten der Beschleunigungssensoren lässt sich zum einen die Art des Überschlags erkennen, zum anderen dienen diese Werte der Plausibilitätsprüfung. Erkennt der Drehratenalgorithmus einen Überschlag, werden die Sicherheitsvorrichtungen nur bei gleichzeitiger Freigabe durch die Plausibilitätskontrolle aktiviert.

Bei einem anderen bekannten Verfahren wird eine rechtzeitige Auslöseentscheidung bei Überschlägen mit hoher lateraler Beschleunigung dadurch ermöglicht, dass ein Schwimmwinkel und die laterale Geschwindigkeit des Fahrzeugs einbezogen werden. Bei einem bekannten Verfahren zur erweiterten Überrollerkennung wird aus einer Gierrate und der Fahrzeuggeschwindigkeit in longitudinaler Richtung unter Berücksichtigung der lateralen Beschleunigung eine Schätzung für die laterale Geschwindigkeit durchgeführt, welche beim seitlichen Abdriften in den Grünstreifen ein Maß für die Überrollwahrscheinlichkeit des Fahrzeugs darstellt. Zur Bestimmung der lateralen Geschwindigkeit wird ebenfalls der so genannte Schwimmwinkel herangezogen.

Generell sind bei Überschlägen frühzeitige Auslöseentscheidungen für die Insassenschutzmittel, z.B. für Window-Airbags, sinnvoll und notwendig. Neben der lateralen Fahrzeuggeschwindigkeit stellt daher der Wankwinkel zu Beginn eines solchen Überschlagsvorganges eine wichtige Größe zur Vorausberechnung des Überschlagsgeschehens dar. Insbesondere spielt der Wankwinkel in Fällen von Auslöseentscheidungen für irreversible Insassenschutzmittel eine wichtige Rolle, wobei die Auslöseentscheidung in Kenntnis des Wankwinkels entsprechend früher erfolgen kann.

Bei den bisher bekannten technischen Lösungen werden die Signale des Quer- und Hochbeschleunigungssensors lediglich zur Erkennung der Art des Überschlages und zur Plausibilisierung der mit einem Wankratensensor gemessenen Wankrate und des daraus berechneten Wankwinkels verwendet. So wird beispielsweise in der WO 2001/044020 ein Verfahren zur Bestimmung des Absolutdrehwinkels eines sich um eine etwa waagrechte Achse drehenden Gegenstandes beschrieben, bei welchem mit einem Hochbeschleunigungssensor und einem Wankratensensor der Absolutdrehwinkel des Fahrzeugs in einem beschränkten Intervall ermittelt werden kann.

Bei den bekannten Verfahren erfolgt die Schätzung des Wankwinkels nicht unabhängig von einem Wankratensensor, welcher idealerweise eine unabhängige Winkelschätzung durch zeitliche Aufintegration der Wankrate liefern sollte. Darüber hinaus ist die Bestimmung von sehr kleinen Wankwinkeln ($< 5°$) aufgrund von Sensorrauschen des Wankratensensors sehr schwierig.

Ein derartiges Verfahren ist aus der DE 19744083 A gemäß Oberbegriff des Anspruchs 1 bekannt.

Vorteile der Erfindung

Das erfindungsgemäße Verfahren zur Wankwinkelbestimmung für Insassenschutzvorrichtungen mit den Merkmalen des unabhängigen Patentanspruchs 1 hat demgegenüber den Vorteil, dass der Wankwinkel unabhängig von einem Wankratensensor und ohne Einschränkung des Wankwinkelbereichs mit Hilfe der Signale eines Querbeschleunigungssensors und eines Hochbeschleunigungssensors kontinuierlich geschätzt werden kann und beispielsweise zu einem frühen Zeitpunkt mindestens einem Auslöseverfahren für Insassenschutzmittel zur Verfügung gestellt werden kann. Durch das erfindungsgemäße Verfahren werden zur Berechung der Zentripetalbeschleunigung weitere Fahrdynamikgrößen ermittelt, welche eine Fahrzeuggeschwindigkeit, einen Gierwinkel und einen Schwimmwinkel umfassen, wodurch die Schätzung des Wankwinkels in vorteilhafter Weise verbessert wird. Diese zusätzlichen Fahrdynamiksensordaten können beispielsweise von anderen Sensoreinheiten im Fahrzeug, z.B. von einem elektronischen Stabilitätsprogrammiersystem (ESP-System), zur Verfügung gestellt werden. Insgesamt ergibt sich durch das erfindungsgemäße Verfahren in vorteilhafter Weise eine genauere und stabilere direkte Wankwinkelschätzung, dies gilt insbesondere im Bereich kleiner Wankwinkel. Durch den bereitgestellten genaueren und stabileren Wankwinkel können nachfolgende Auslöseverfahren für Insassenschutzsysteme Fahrzeugüberschläge frühzeitig erkennen, wodurch gewährleistet werden kann, dass Sicherheitsvorrichtungen wie Gurtstraffer, Kopfairbag, Window-Airbag und Überrollbügel rechtzeitig aktiviert werden und sich somit das Verletzungsrisiko für die Insassen verringert. Somit ermöglicht das erfindungsgemäße Verfahren zur Wankwinkelbestimmung in vorteilhafter Weise eine Verbesserung der Berechnung von Auslöseentscheidungen für Insassenschutzsysteme.

Als weiterer Vorteil erhöht das erfindungsgemäße Verfahren zur Wankwinkelbestimmung, insbesondere im Bereich von kleinen Wankwinkeln, die Robustheit der nachgeschalteten Auslöseverfahren und verbessert deren Rücksetzverhalten. Dadurch können in vorteilhafter Weise eine verbesserte Auslöseleistungsfähigkeit erreicht, stabile Fahrsituationen und Misuses besser erkannt und eine versehentliche Auslösung von irreversiblen Rückhaltemitteln verhindert werden. Die Kombination mit schon im Fahrzeug integrierten Sensorsystemen ergibt hier einen Mehrnutzen was Stabilität und Robustheit des Auslöseverfahrens betrifft, wodurch insbesondere die Überschlagsdetektierung bei geländegängigen Fahrzeugen aufgrund des sehr robusten Auslöseverfahrens verbessert werden kann. Aufgrund der Fahrzeugauslegung für das Gelände, ist im Vergleich zum normalen Straßenverkehr bezüglich der Robustheit mit einer gesteigerten Anforderung an das Auslöseverfahren zur Erkennung von Misuses zu rechnen.

Zudem kann das erfindungsgemäße Verfahren zur Schätzung des Wankwinkels zusätzlich zu einem Wankratensensor eingesetzt werden, um in vorteilhafter Weise als alternativer Pfad die Wankwinkelschätzung über den Wankratensensor zu stützen bzw. zur Plausibilisierung der Auslöseentscheidung eingesetzt zu werden. Daher werden durch die zusätzliche Möglichkeit der Wankwinkelbestimmung das Auslöseverhalten und das Rücksetzverhalten der Auslöseverfahren für Insassenschutzsysteme weiter verbessert.

Die erfindungsgemäße Vorrichtung zur Wankwinkelbestimmung für Insassenschutzvorrichtungen mit den Merkmalen des unabhängigen Patentanspruchs 10 hat den Vorteil, dass zwei Beschleunigungssensoren zur Erfassung der Querbeschleunigung und zur Erfassung der Hochbeschleunigung verwendet werden und eine Auswerteeinheit basierend auf der erfassten Querbeschleunigung und der erfassten Hochbeschleunigung den Wankwinkel des Fahrzeugs schätzt, so dass auf einen Wankwinkelsensor verzichtet werden kann. Zur Verbesserung der Schätzung des Wankwinkels wertet die Auswerteeinheit Daten von mindestens einer weiteren Sensoreinheit im Fahrzeug aus, welche weitere Fahrdynamikdaten ermittelt und für eine Berechnung einer Zentripetalbeschleunigung bereitstellt. Die Fahrdynamikdaten umfassen eine Fahrzeuggeschwindigkeit, einen Gierwinkel und einen Schwimmwinkel. Da ein Wankratensensor zur Abschätzung des Wankwinkels nicht mehr erforderlich ist, können durch den Verzicht auf den Wankratensensor die Kosten für das zugehörige Steuergerät gesenkt werden. Wird die erfindungsgemäße Vorrichtung als alternativer Pfad und zur Stützung der Wankwinkelberechnung durch den Wankratensensor eingesetzt, dann stehen in vorteilhafter Weise zwei alternative Pfade zur Wankwinkelbestimmung zur Verfügung, wodurch die Robustheit der Auslöseverfahren für Insassenschutzvorrichtungen erhöht werden kann.

Durch die in den abhängigen Ansprüchen aufgeführten Maßnahmen und Weiterbildungen sind vorteilhafte Verbesserungen des im unabhängigen Patentanspruch angegebenen Verfahrens zur Wankwinkelbestimmung für Insassenschutzvornchtungen möglich.

Besonders vorteilhaft ist, dass durch Lenkbewegungen verursachte Beschleunigungen und/oder durch Fahrbahnunebenheiten verursachte Wankbewegungen bestimmt und als Korrekturgrößen bei der Ermittlung der aktuellen Querbeschleunigung und der aktuellen Hochbeschleunigung und somit bei der Schätzung des Wankwinkels berücksichtigt werden. Um Korrekturgrößen für die Wankbewegung zu berechnen wird angenommen, dass sich die Wankbewegungen in erster Näherung als eine Rotation der Zentralsensorik um einen fiktiven Drehpunkt betrachten lassen. Der Hochbeschleunigungssensor "sieht" dann einen zusätzlichen "Fliehkraftanteil" und der Querbeschleunigungssensor erkennt bei einer Änderung der Wankrate einen zusätzlichen tangentialen Anteil. Mit der gemessenen Wankrate können dann Korrekturgrößen für die Hochbeschleunigung und die Querbeschleunigung bestimmt werden. So kann zum Ausgleich der Fahrbahnunebenheiten beispielsweise ein erster zusätzlicher Querbeschleunigungsanteil und ein zusätzlicher Hochbeschleunigungsanteil als Korrekturgrößen berechnet werden. Der erste zusätzliche Querbeschleunigungsanteil $\Delta a_{y1}$ kann beispielsweise nach der Gleichung $\Delta a_{y1} = \dot{\omega}_x {}^* r_z$ berechnet werden und der zusätzliche Hochbeschleunigungsanteil $\Delta a_z$ kann beispielsweise nach der Gleichung $\Delta a_z = \omega_x^2 {}^* r_z$ berechnet werden.

Um Korrekturgrößen für die Lenkbewegung zu berechnen wird angenommen, dass eine Lenkbewegung während einer normalen Fahrsituation einen Drehpunkt in der Nähe der Hinterachse aufweist, daher erfährt der Querbeschleunigungssensor eine zusätzliche tangentiale Beschleunigungskomponente, welche als zweiter zusätzlicher Querbeschleunigungsanteil berechnet wird. Der Hochbeschleunigungssensor ist bei einem Lenkvorgang nicht betroffen. Ein Sensor in x-Richtung, der zusätzliche Fliehkräfte erfahren würde, wird in dieser Betrachtung nicht berücksichtigt. Der zweite zusätzliche Querbeschleunigungsanteil $\Delta a_{y2}$ kann beispielsweise nach der Gleichung $\Delta a_{y2} = \dot{\omega}_z {}^* r_x$ berechnet

werden.

Das erfindungsgemäße Verfahren und die erfindungsgemäße Vorrichtung zur Wankwinkelbestimmung für Insassenschutzvorrichtungen zeigen das hohe Verbesserungspotential bei der direkten Wankwinkelberechnung, wenn zusätzliche Sensorinformationen genutzt werden, um die gemessenen Werte der Zentralsensorik über Korrekturgrößen zu verbessern und um Größen des Gleichungssystems zur Wankwinkelberechnung, wie die Zentripetalbeschleunigung, alternativ zu berechnen. So wird die Genauigkeit der Wankwinkelschätzung, insbesondere bei kleinen Wankwinkelwerten und bei während der Fahrt über Unebenheiten auftretenden Schwingungen der Fahrzeugfedersysteme oder bei aktiven Lenkbewegungen des Fahrers verbessert. Darüber hinaus wird die Genauigkeit der über zusätzliche Sensordaten abgeschätzten Zentripetalbeschleunigung im unteren Wankwinkelbereich verbessert, wodurch die Schwankungen des geschätzten Absolutwankwinkels reduziert werden können.

Zeichnung

Ausführungsbeispiele der Erfindung sind in der Zeichnung dargestellt und werden in der nachfolgenden Beschreibung näher erläutert.

Es zeigen:

Figur 1    ein schematisches Blockdiagramm einer Vorrichtung zur Wankwinkelbestimmung für In- sassenschutzvorrichtungen,

Figur 2    eine schematische Darstellung einer Modellvorstellung der Zusammenhänge bei kleinen Unebenheiten der Fahrbahn,

Figur 3    eine schematische Darstellung einer Modellvorstellung der Zusammenhänge bei einer Lenkbewegung,

Figur 4    eine schematische Darstellung des Verlaufs von verschiedenen Verfahren zur Wankwinkel- schätzung während einer Steilkurvenfahrt,

Figur 5    eine schematische Darstellung des Verlaufs von verschiedenen Verfahren zur Wankwinkel- schätzung während einer Steilkurvenfahrt mit einer Lenkbewegung beim Ausfahren aus der Steilkurve, und

Figur 6    eine höher aufgelöste Darstellung des Verlaufs von verschiedenen Verfahren zur Wank- winkelschätzung aus Fig. 5.

Beschreibung

Generell sind bei Überschlägen frühzeitige Auslöseentscheidungen für die Insassenschutzmittel, z.B. für Gurtstraffer, Kopfairbag, Window-Airbag und Überrollbügel, sinnvoll und notwendig. Neben der lateralen Fahrzeuggeschwindigkeit stellt daher der Wankwinkel zu Beginn eines solchen Überschlagsvorganges eine wichtige Größe zur Vorausberechnung des Überschlagsgeschehens dar. Bei den bisher bekannten technischen Lösungen werden die Signale des Quer- und Hochbeschleunigungssensors lediglich zur Erkennung der Art des Überschlages und zur Plausibilisierung der mit einem Wankratensensor gemessenen Wankrate und des daraus berechneten Wankwinkels verwendet.

Zudem ist in einer älteren Anmeldung der Anmelderin ein Verfahren zur kontinuierlichen Berechnung des absoluten Fahrzeugwankwinkels mit Hilfe der Signale eines Querbeschleunigungssensors und eines Hochbeschleunigungssensors während stabiler Fahrsituationen als Ausgangswankwinkel zur Verbesserung der Berechnung von Auslöseentscheidungen in entsprechenden Untermodulen eines Insassenschutzsystems beschrieben.

Erfindungsgemäß wird ein Verfahren zur Wankwinkelbestimmung für Insassenschutzvorrichtungen und eine zugehörige Vorrichtung vorgeschlagen, welche eine Querbeschleunigung und eine Hochbeschleunigung des Fahrzeugs erfassen und den Wankwinkel des Fahrzeug basierend auf der erfassten Querbeschleunigung und der erfassten Hochbeschleunigung schätzten, wobei weitere Fahrdynamikgrößen ermittelt werden, welche eine Fahrzeuggeschwindigkeit, einen Gierwinkel und einen Schwimmwinkel umfassen, und wobei eine Zentripetalbeschleunigung zur Verbesserung der Schätzung des Wankwinkels aus diesen Fahrdynamikgrößen berechnet wird.

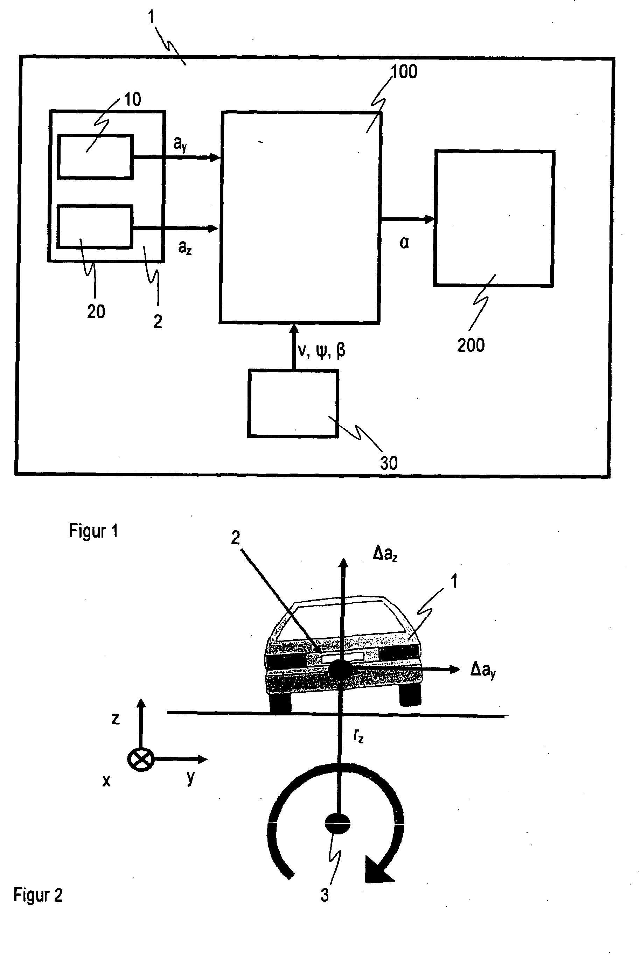

Wie aus Fig. 1 ersichtlich ist, umfasst ein Fahrzeug 1 eine erfindungsgemäße Vorrichtung zur Wankwinkelbestimmung für eine Insassenschutzvornchtung 200 mit einem ersten Beschleunigungssensor 10 zur Erfassung einer Querbeschleunigung $a_y$, einem zweiten Beschleunigungssensor 20 zur Erfassung einer Hochbeschleunigung $a_z$, einer Sensoreinheit 30 zur Ermittlung weiterer Fahrdynamikgrößen, welche eine Fahrzeuggeschwindigkeit v, einen Gierwinkel $\Psi$ und einen Schwimmwinkel $\beta$ umfassen, und einer Auswerteeinheit 100, welche den Wankwinkel $\alpha$ des Fahrzeugs basierend auf der erfassten Querbeschleunigung $a_y$ und der erfassten Hochbeschleunigung $a_z$ schätzt und eine Zentripetalbeschleunigung $\frac{v^2}{r}$ zur Verbesserung der Schätzung des Wankwinkels $\alpha$ aus diesen Fahrdynamikgrößen berechnet. Im dargestellten Ausführungsbeispiel sind der erste und zweite Beschleunigungssensor 10, 20 in eine Zentralsensorik 2 integriert.

Nachfolgend werden die mathematischen Grundlagen und die daraus abgeleiteten Gleichungen beschrieben, welche die Auswerteeinheit 100 zur kontinuierlichen Bestimmung des aktuellen Wankwinkels benutzt. Die Beschleunigungen, welche ein Sensor im Fahrzeugschwerpunkt in der Nähe der Wankachse messen kann, lassen sich in der Auswerteeinheit 100 durch eine homogene Transformation gemäß Gleichung (1) aus den äußeren am Fahrzeug angreifenden Beschleunigungen in Weltkoordinaten berechnen.

$$\vec{a}_{Sensor} = X * \vec{a}_{außen} \tag{1}$$

Der äußere Beschleunigungsvektor setzt sich aus einer Beschleunigungskomponente in x-Richtung, welche beispielsweise durch Gas geben oder Bremsen des Fahrzeugs beeinflusst wird, einer Zentripetalbeschleunigungskomponente in y-Richtung, welche insbesondere bei Kurvenfahrten oder bei Kreisfahrten auftritt, sowie der Erdbeschleunigungskomponente in z-Richtung zusammen. Eine Drehung des Fahrzeugs um seine Längsachse um einen Wankwinkel $\alpha$ lässt sich durch eine Multiplikation des äußeren Beschleunigungsvektors mit einer 3x3-Matrix gemäß Gleichung (2) darstellen.

$$\vec{a}_{sensor} = \begin{pmatrix} 1 & 0 & 0 \\ 0 & \cos\alpha & -\sin\alpha \\ 0 & \sin\alpha & \cos\alpha \end{pmatrix} * \begin{pmatrix} -\dot{v} \\ \dfrac{v^2}{r} \\ g \end{pmatrix} \tag{2}$$

Da der erste Beschleunigungssensor 10 nur die Querbeschleunigung $a_y$ des Fahrzeugs erfasst, d.h. die y-Komponente, und der zweite Beschleunigungssensor 20 nur die Hochbeschleunigung $a_z$ des Fahrzeugs erfasst, d.h. die z-Komponente, werden nach der Matrixmultiplikation nachfolgend nur die Zusammenhänge (3) und (4) betrachtet, welche die x-Komponenten und die y-Komponente der Fahrzeugbeschleunigung betreffen.

$$a_y = \cos\alpha * \frac{v^2}{r} - \sin\alpha * g \tag{3}$$

$$a_z = \sin\alpha * \frac{v^2}{r} + \cos\alpha * g \tag{4}$$

In den Gleichungen (3) und (4) sind neben dem Wankwinkel $\alpha$ auch noch die Zentripetalbeschleunigung $\dfrac{v^2}{r}$ unbekannt, wobei die Beschleunigungskomponenten $a_y$ und $a_z$ als Messwerte und die Erdbeschleunigung g als Konstante zur Verfügung stehen. Da für die nachfolgenden Verfahren die Kenntnis der Fahrzeuggeschwindigkeit v oder des Kurvenradius r nicht notwendig ist, kann die Zentripetalbeschleunigung $\dfrac{v^2}{r}$ als eine einzelne Größe bestimmt werden. Die Zentripetalbeschleunigung $\dfrac{v^2}{r}$ wird bisher beispielsweise aus den Gleichungen (3) und (4) bestimmt. Durch Quadrieren und nachfolgendem Addieren der Gleichungen (3) und (4) lässt sich die Zentripetalbeschleunigung $\dfrac{v^2}{r}$ beispielsweise gemäß Gleichung (5) bestimmen.

$$\frac{v^2}{r} = \pm\sqrt{a_y^2 + a_z^2 - g^2} \tag{5}$$

Diese Berechnungsart der Zentripetalbeschleunigung $\frac{v^2}{r}$ reagiert insbesondere auf leichte Schwankungen in der Hochbeschleunigung $a_z$ sehr sensitiv, was wiederum zu großen Schwankungen im niedrigen Wankwinkelbereich bei der Berechnung des Wankwinkels gemäß Gleichung (6)

$$\alpha = \frac{-a_y * g + a_z * v^2/r}{g^2 + \left(v^2/r^2\right)} \qquad (6)$$

führen kann. Eine Verbesserung lässt sich dadurch erreichen, dass die Zentripetalbeschleunigung $\frac{v^2}{r}$ nicht mit Gleichung (5) sondern auf einem alternativen Weg berechnet wird. Basierend auf der ermittelten Fahrzeuggeschwindigkeit v, dem Gierwinkel $\psi$ und dem Schwimmwinkel $\beta$ berechnet die Auswerteeinheit 100 die Zentripetalbeschleunigung $\frac{v^2}{r}$ gemäß Gleichung (7):

$$v^2/r = v * (\dot{\psi} + \dot{\beta}) \qquad (7)$$

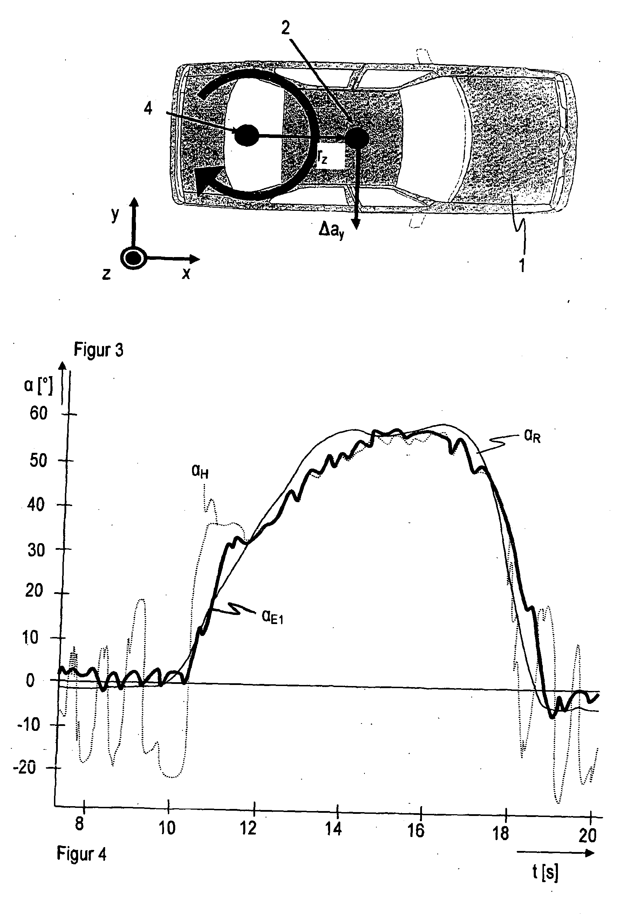

Stehen aufgrund anderer Sensorsysteme im Fahrzeug diese Fahrdynamikgrößen zur Verfügung, so lässt sich hiermit die direkte Wankwinkelschätzung gerade im Bereich kleiner Wankwinkel entscheidend verbessern. Figur 4 verdeutlicht dies anhand einer schematischen Darstellung des Verlaufs von verschiedenen Verfahren zur Wankwinkelschätzung während einer Steilkurvenfahrt. Der Wankwinkelverlauf $\alpha_R$ repräsentiert den von einer Referenzsensorik ermittelten Verlauf des Wankwinkels $\alpha$. Der gepunktet dargestellte Wankwinkelverlauf $\alpha_H$ repräsentiert den mit der Gleichung (6) berechneten Verlauf des Wankwinkels $\alpha$, wenn die Zentripetalbeschleunigung $\frac{v^2}{r}$ mit Gleichung (5) bestimmt wird. Der fett dargestellte Wankwinkelverlauf $\alpha E_1$ repräsentiert den mit der Gleichung (6) berechneten Verlauf des Wankwinkels $\alpha$, wenn die Zentripetalbeschleunigung $\frac{v^2}{r}$ mit Gleichung (7) bestimmt wird. Die verbesserte Schätzung der Zentripetalbeschleunigung $\frac{v^2}{r}$ nach Gleichung (7) bewirkt im niedrigen Wankwinkelbereich bei dem Wankwinkelverlauf $\alpha_{E1}$ deutlich geringere Schwankungen als bei dem Wankwinkelverlauf $\alpha_H$ mit der bisherigen Abschätzung der Zentripetalbeschleunigung $\frac{v^2}{r}$ nach Gleichung (5).

Durch Lenkbewegungen und Unebenheiten der Fahrbahn entstehen kleine Wankbewegungen des Fahrzeugs 1. Um Korrekturgrößen für durch Fahrbahnunebenheiten verursachte Wankbewegungen zu berechnen, welche die Schätzung der direkten Wankwinkelwerte verfälschen können, wird angenommen, dass sich die Wankbewegungen in erster Näherung als eine Rotation der Zentralsensorik 2 um einen fiktiven Drehpunkt 3 betrachten lassen. Daher zeigt Figur 2 eine schematische Darstellung einer Modellvorstellung der Zusammenhänge bei kleinen Unebenheiten der Fahrbahn, die ein zusätzliches Wanken verursachen können. Mit Hilfe der beispielsweise mit einem Drehratensensor gemessenen Wankrate können dann Korrekturengrößen $\Delta a_{y1}$, $\Delta a_{y2}$, $\Delta a_z$ für die Hochbeschleunigung $a_z$ und die Querbeschleunigung $a_y$ ermittelt werden. Der erste Beschleunigungssensor 10 zur Ermittlung der Querbeschleunigung $a_y$, ermittelt bei einer durch die Wankbewegung verursachte Änderung der Wankrate einen ersten zusätzlichen tangentialen Anteil $\Delta a_{y1}$, welcher gemäß Gleichung (8) bestimmt werden kann.

$$\Delta a_{y1} = \dot{\omega}_x * r_z \qquad (8)$$

Der zweite Beschleunigungssensor 20 zur Ermittlung der Hochbeschleunigung $a_z$ ermittelt bei einer durch die Wankbewegung verursachte Änderung der Wankrate einen zusätzlichen Fliehkraftanteil $\Delta a_z$, welcher gemäß Gleichung (9) bestimmt werden kann.

$$\Delta a_z = \omega_x^{\ 2} * r_z \qquad\qquad\qquad\qquad (9)$$

Zudem wird die gemäß Gleichung 7 erzeugte Zentripetalbeschleunigung $\dfrac{v^2}{r}$ ebenfalls angepasst.

Durch die Bestimmung des ersten zusätzlichen Querbeschleunigungsanteils $\Delta a_{y1}$ und des zusätzliches Hochbeschleunigungsanteils $\Delta a_z$ können die Auswirkungen dieser Wankbewegungen auf die Hochbeschleunigung $a_z$ und die Querbeschleunigung $a_y$ korrigiert werden.

Ähnlich verhält es sich bei Lenkbewegungen des Fahrers. Um Korrekturgrößen für durch Lenkbewegungen verursachte Wankbewegungen zu berechnen, welche die Schätzung der direkten Wankwinkelwerte verfälschen können, wird angenommen, dass sich ein Lenkvorgang als eine Rotation der Zentralsensorik 2 um einen fiktiven Drehpunkt 4 betrachten lässt, welcher während einer normalen Fahrsituation in der Nähe der Hinterachse angeordnet ist. Daher zeigt Figur 3 eine schematische Darstellung einer Modellvorstellung der Zusammenhänge bei einem Lenkvorgang. Wie aus Figur 3 ersichtlich ist, erfährt die Zentralsensorik 2 mit dem ersten Beschleunigungssensor 10, welcher die Querbeschleunigung $a_y$ ermittelt, eine zusätzliche zweite tangentiale Beschleunigungskomponente und ermittelt einen zweiten zusätzlichen Querbeschleunigungsanteil $\Delta a_{y2}$. Dies gilt auch für die gemäß den Gleichungen (5) und (7) berechneten Werte der Zentripetalbeschleunigung $\dfrac{v^2}{r}$, welche in diesem Fall ebenfalls angepasst werden. Für die zusätzliche Auswirkung auf die Querbeschleunigungskomponente $a_y$ ergibt sich der zweite zusätzliche Querbeschleunigungsanteil gemäß Gleichung (10).

$$\Delta a_y = \dot{\omega}_z * r_x \qquad\qquad\qquad\qquad (10)$$

Der zweite Beschleunigungssensor 20 zur Ermittlung der Hochbeschleunigung $a_z$ ist bei einem Lenkvorgang nicht betroffen. Ein Sensor in x-Richtung, welcher zusätzliche Fliehkräfte erfahren würde, wird in dieser Betrachtung nicht berücksichtigt.

Kombiniert man die Gleichungen (3) und (4) mit den Korrekturen gemäß den Gleichungen (8), (9) und (10), dann ergibt sich ein neues Gleichungssystem mit den Gleichungen (11) und (12):

$$a_y = \cos\alpha * v^2 / r - \sin\alpha * g + \dot{\omega}_x * r_z + \dot{\omega}_z * r_x \qquad\qquad (11)$$

$$a_z = \sin\alpha * v^2 / r + \cos\alpha * g + \omega_x^{\ 2} * r_z \qquad\qquad (12)$$

Ähnliche Korrekturen sind auch zur Bestimmung der Zentripetalbeschleunigung $\dfrac{v^2}{r}$ in den Gleichungen (5) und (7) zu berücksichtigen.

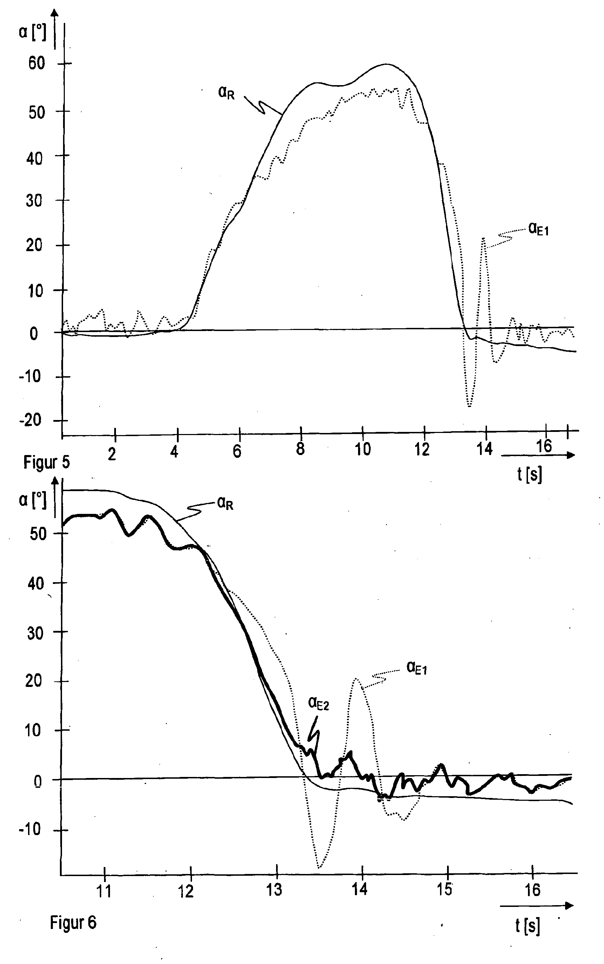

Figur 5 zeigt eine schematische Darstellung des Verlaufs von verschiedenen Verfahren zur Wankwinkelschätzung während einer Steilkurvenfahrt mit einer Lenkbewegung beim Ausfahren aus der Steilkurve. Analog zu Figur 4 repräsentiert der Wankwinkelverlauf $\alpha_R$ den von einer Referenzsensorik ermittelten Verlauf des Wankwinkels $\alpha$. Der gepunktet dargestellte Wankwinkelverlauf $\alpha_{E1}$ repräsentiert den mit der Gleichung (6) berechneten Verlauf des Wankwinkels $\alpha$, wenn die Zentripetalbeschleunigung $\dfrac{v^2}{r}$ mit Gleichung (7) bestimmt wird. Beim Ausfahren aus der Steilkurve führt der Fahrer eine Lenkbewegung aus, wodurch die Beschleunigungssignale beeinflusst werden und die gepunktet dargestellte Wankwinkelberechnungsfunktion $\alpha_{E1}$ im Vergleich zur Referenzmessung $\alpha_R$ überschwingt.

Figur 6 zeigt eine höher aufgelöste Darstellung des Verlaufs von verschiedenen Verfahren zur Wankwinkelschätzung aus Fig. 5 mit einem zusätzlichen fett dargestellten Wankwinkelverlauf $\alpha_{E2}$, welcher den mit der Gleichung (6) berechneten Verlauf des Wankwinkels α repräsentiert, wenn die Zentripetalbeschleunigung $\frac{v^2}{r}$ mit Gleichung (7) bestimmt wird und die Querbeschleunigung $a_y$ gemäß der Gleichung (9) berechnet wird und die Hochbeschleunigung $a_z$ gemäß der Gleichung (10) berechnet wird. Wie aus Figur 6 ersichtlich ist, können die durch die zusätzlichen Wank- und Lenkbewegungen verursachten Abweichungen des Wankwinkelverlauf $\alpha_{E1}$ vom Referenzverlauf $\alpha_R$ durch die im Wankwinkeiverlauf $\alpha_{E2}$ berücksichtigten Korrekturgrößen fast vollständig kompensiert werden. Die Wankwinkelschätzung ist im höheren Winkelbereich genauer und die Schwankungen durch die Lenkbewegung sind fast vollständig ausgeglichen.

Das erfindungsgemäße Verfahren und die zugehörige Vorrichtung ermöglichen durch die Nutzung der Beschleunigungssignale, sowie der weiteren Fahrdynamiksignale anderer Sensorsysteme eine genaue und robuste Wankwinkelbestimmung, wodurch Überschläge sicher erkannt werden können. Deshalb können das erfindungsgemäße Verfahren und die zugehörige Vorrichtung zur Wankwinkelschätzung bei der Überschlagserkennung eingesetzt werden, beispielsweise als alternativer Pfad und zur Stützung der Wankwinkelberechnung, bzw. zur Plausibilisierung der Auslöseentscheidung. Der Verzicht auf einen Wankratensensor würde die Kosten für das zugehörige Steuergerät weiter senken, so dass auch Fahrzeugtypen in den unteren Preissegmenten mit dem Steuergerät ausgerüstet werden können. Die Kombination mit schon im Fahrzeug integrierten Sensorsystemen ergibt hier einen Mehmutzen was Stabilität und Robustheit des Auslöseverfahrens betrifft. Dies gilt insbesondere im Bereich von geländegängigen Fahrzeugen, da aufgrund der Fahrzeugauslegung für das Gelände im Vergleich zum normalen Straßenverkehr bezüglich der Robustheit mit einer gesteigerten Anforderung an das Auslöseverfahren zur Erkennung von Misuses zu rechnen ist.

**Patentansprüche**

1. Verfahren zur Wankwinkelbestimmung für Insassenschutzvorrichtungen, wobei

   - eine Querbeschleunigung ($a_y$) und
   - eine Hochbeschleunigung ($a_z$) des Fahrzeugs erfasst werden, und
   - der Wankwinkel (α) des Fahrzeug basierend auf der erfassten Querbeschleunigung ($a_y$) und der erfassten Hochbeschleunigung ($a_z$) geschätzt wird,
   - wobei weitere Fahrdynamikgrößen ermittelt werden, welche eine Fahrzeuggeschwindigkeit (v), einen Gierwinkel (ψ) und einen Schwimmwinkel (β) umfassen, und **dadurch gekennzeichnet, dass** eine Zentripetalbeschleunigung ($\frac{v^2}{r}$) zur Verbesserung der Schätzung des Wankwinkels (α) aus diesen Fahrdynamikgrößen berechnet wird.

2. Verfahren nach Anspruch 1, **dadurch gekennzeichnet, dass** durch Lenkbewegungen verursachte Beschleunigungen und/oder durch Fahrbahnunebenheiten verursachte Wankbewegungen bestimmt und als Korrekturgrößen ($\Delta a_{y1}$, $\Delta a_{y2}$, $\Delta a_z$) bei der Ermittlung der aktuellen Querbeschleunigung ($a_y$) und der aktuellen Hochbeschleunigung ($a_z$) und somit bei der Schätzung des Wankwinkels (α) berücksichtigt werden.

3. Verfahren nach Anspruch 2, **dadurch gekennzeichnet, dass** die durch Fahrbahnunebenheiten verursachte Wankbewegung im normalen Fahrzustand als eine Rotation um einen fiktiven Drehpunkt (3) betrachtet und als erster zusätzlicher Querbeschleunigungsanteil ($\Delta a_{y1}$) und als zusätzlicher Hochbeschleunigungsanteil ($\Delta a_z$) berechnet wird.

4. Verfahren nach Anspruch 3, **dadurch gekennzeichnet, dass** der erste zusätzliche Querbeschleunigungsanteil ($\Delta a_{y1}$) nach der Gleichung $\Delta a_{y1} = \dot{\omega}_x * r_z$ berechnet wird und der zusätzliche Hochbeschleunigungsanteil ($\Delta a_z$) nach der Gleichung $\Delta a_z = \omega_x^2 * r_z$ berechnet wird.

5. Verfahren nach einem der Ansprüche 2 bis 4, **dadurch gekennzeichnet, dass** eine Lenkbewegung während einer normalen Fahrsituation einen Drehpunkt (4) in der Nähe der Hinterachse aufweist, deren verursachte Beschleunigung als zweiter zusätzlicher Querbeschleunigungsanteil ($\Delta a_{y2}$) berechnet wird.

6. Verfahren nach Anspruch 5, **dadurch gekennzeichnet, dass** der zweite zusätzliche Querbeschleunigungsanteil

($\Delta a_{y2}$) nach der Gleichung $\Delta a_{y2} = \dot{\omega}_z * r_x$ berechnet wird.

7. Verfahren nach einem der Ansprüche 1 bis 6, **dadurch gekennzeichnet, dass** die Zentripetalgbeschleunigung

$(\dfrac{v^2}{r})$ nach der Gleichung $\dfrac{v^2}{r} = v * (\dot{\psi} + \dot{\beta})$ berechnet wird.

8. Verfahren nach Anspruch 7, **dadurch gekennzeichnet, dass** die aktuelle Querbeschleunigung ($a_y$) nach der Gleichung $a_y = \cos \alpha * v^2 / r - \sin \alpha * g + \Delta a_{y1} + \Delta a_{y2}$ berechnet wird und die aktuelle Hochbeschleunigung ($a_z$) nach der Gleichung $a_z = \sin \alpha * v^2 / r + \cos \alpha * g + \Delta a_z$ berechnet wird.

9. Verfahren nach einem der Ansprüche 1 bis 8, **dadurch gekennzeichnet, dass** der Wankwinkel ($\alpha$) gemäß der Gleichung

$$\alpha = \frac{-a_y * g + a_z * \dfrac{v^2}{r}}{g^2 + \left(\dfrac{v^2}{r}\right)^2}$$

geschätzt wird.

10. Vorrichtung zur Wankwinkelbestimmung für Insassenschutzvorrichtungen, zur Durchführung des Verfahrens nach einem der Ansprüche 1 bis 9, wobei

- einen ersten Beschleunigungssensor (10) zur Erfassung einer Querbeschleunigung ($a_y$) eines Fahrzeugs,
- einen zweiten Beschleunigungssensor (20) zur Erfassung einer Hochbeschleunigung ($a_z$) des Fahrzeugs,
- mindestens eine weitere Sensoreinheit (30), welche weitere Fahrdynamikgrößen ermittelt und bereitstellt, welche eine Fahrzeuggeschwindigkeit (v), einen Gierwinkel ($\psi$) und einen Schwimmwinkel ($\beta$) umfassen, und
- einer Auswerteeinheit (100), welche den Wankwinkel ($\alpha$) des Fahrzeugs basierend auf der erfassten Querbeschleunigung ($a_y$) und der erfassten Hochbeschleunigung ($a_z$) schätzt, **dadurch** gekehnzeichnet, dass die Auswerteeinheit (100) die Schätzung des Wankwinkels durch eine Berechnung einer Zentripetalbeschleunigung

$(\dfrac{v^2}{r})$ aus den Größen Fahrzeuggeschwindigkeit (v), Gierwinkel ($\psi$) und Schwimmwinkel ($\beta$) verbessert.

**Claims**

1. Method for determining the roll angle for occupant protection apparatuses, in which

- a lateral acceleration ($a_y$) and
- a vertical acceleration ($a_z$) of the vehicle are acquired, and
- the roll angle ($\alpha$) of the vehicle is estimated on the basis of the acquired lateral acceleration ($a_y$) and the acquired vertical acceleration ($a_z$),
- with further vehicle dynamic variables being determined, which comprise a vehicle speed (v), a yaw angle ($\Psi$) and an attitude angle ($\beta$),

**characterized in that** a centripetal acceleration $(\dfrac{v^2}{r})$ is calculated for the purpose of improving the estimate of

the roll angle ($\alpha$) from these vehicle dynamic variables.

2. Method according to Claim 1, **characterized in that** accelerations caused by steering movements and/or rolling movements caused by unevennesses of the roadway are determined and are taken into account as correction variables ($\Delta a_{y1}$, $\Delta a_{y2}$, $\Delta a_z$) when determining the current lateral acceleration ($a_y$) and the current vertical direction ($a_z$), and thus when estimating the roll angle ($\alpha$).

3. Method according to Claim 2, **characterized in that** the rolling movement caused by unevennesses of the roadway is regarded in the normal driving state as a rotation about an imaginary pivot point (3) and is calculated as first additional lateral acceleration component ($\Delta a_{y1}$) and as additional vertical acceleration component ($\Delta a_z$).

4. Method according to Claim 3, **characterized in that** the first additional lateral acceleration component ($\Delta a_{y1}$) is calculated using the equation $\Delta a_{y1} = \dot{\omega}_x {}^* r_z$, and the additional lateral acceleration component ($\Delta a_z$) is calculated using the equation $\Delta a_z = \omega x^{2*} r_z$.

5. Method according to one of Claims 2 to 4, **characterized in that** a steering movement during a normal driving situation has a pivot point (4) in the vicinity of the rear axle whose caused acceleration is calculated as second additional lateral acceleration component ($\Delta a_{y2}$).

6. Method according to Claim 5, **characterized in that** the second additional lateral acceleration component ($\Delta a_{y2}$) is calculated using the equation $\Delta a_{y2} = \dot{\omega}_z {}^* r_x$.

7. Method according to one of Claims 1 to 6, **characterized in that** the centripetal acceleration $\left( \dfrac{v^2}{r} \right)$ is calculated

using the equation $\dfrac{v^2}{r} = v * (\dot{\psi} + \dot{\beta})$ .

8. Method according to Claim 7, **characterized in that** the current lateral acceleration ($a_y$) is calculated using the equation $a_y = \cos \alpha {}^* v^2/r - \sin \alpha {}^* g + \Delta a_{y1} + \Delta a_{y2}$, and the current vertical acceleration ($a_z$) is calculated using the equation $a_z = \sin \alpha {}^* v^2/r + \cos \alpha {}^* g + \Delta a_z$.

9. Method according to one of Claims 1 to 8, **characterized in that** the roll angle ($\alpha$) is estimated in accordance with the equation

$$\alpha \;=\; \frac{-a_y * g + a_z * \dfrac{v^2}{r}}{g^2 + \left( \dfrac{v^2}{r} \right)^2} \; .$$

10. Apparatus for determining the roll angle for occupant protection apparatuses for the purpose of carrying out the method according to one of Claims 1 to 9, comprising

- a first acceleration sensor (10) for acquiring a lateral acceleration ($a_y$) of a vehicle,
- a second acceleration sensor (20) for acquiring a vertical acceleration ($a_z$) of the vehicle,
- at least one further sensor unit (30), which determines and provides further vehicle dynamic variables which comprise a vehicle speed (v), a yaw angle ($\psi$) and an attitude angle ($\beta$), and
- an evaluation unit (100) which estimates the roll angle ($\alpha$) of the vehicle on the basis of the acquired lateral acceleration ($a_y$) and the acquired vertical acceleration ($a_z$),

**characterized in that** the evaluation unit (100) improves the estimate of the roll angle by calculating a centrifugal

acceleration $\left( \dfrac{v^2}{r} \right)$ from the variables of vehicle speed (v), yaw angle ($\psi$) and attitude angle ($\beta$).

**Revendications**

1.  Procédé de détermination de l'angle de roulis pour des dispositifs de protection des occupants,

    - une accélération transversale ($a_y$) et
    - une accélération en hauteur ($a_z$) du véhicule étant détectées et
    - l'angle de roulis ($\alpha$) du véhicule étant estimé en se basant sur l'accélération transversale ($a_y$) détectée et l'accélération en hauteur ($a_z$) détectée,
    - d'autres grandeurs dynamiques de déplacement étant déterminées, lesquelles comprennent une vitesse du véhicule (v), un angle de lacet ($\psi$) et un angle de flottement ($\beta$), **caractérisé en ce qu'**une accélération centripète ($\frac{v^2}{r}$) est calculée pour améliorer l'estimation de l'angle de roulis ($\alpha$) à partir de ces grandeurs dynamiques de déplacement.

2.  Procédé selon la revendication 1, **caractérisé en ce que** les accélérations provoquées par les mouvements de changement de direction et/ou les mouvements de roulis provoqués par les irrégularités de la chaussée sont déterminées et prises en compte en tant que grandeurs de correction ($\Delta a_{y1}$, $\Delta a_{y2}$, $\Delta a_z$) lors de la détermination de l'accélération transversale ($a_y$) actuelle et de l'accélération en hauteur ($a_z$) actuelle et ainsi lors de l'estimation de l'angle de roulis ($\alpha$).

3.  Procédé selon la revendication 2, **caractérisé en ce que** le mouvement de roulis provoqué par les irrégularités de la chaussée pendant un déplacement normal est considéré comme une rotation autour d'un point de rotation fictif (3) et calculé en tant que première part d'accélération transversale supplémentaire ($\Delta a_{y1}$) et part d'accélération en hauteur supplémentaire ($\Delta a_z$).

4.  Procédé selon la revendication 3, **caractérisé en ce que** la première part d'accélération transversale supplémentaire ($\Delta a_{y1}$) est calculée d'après l'équation $\Delta a_{y1} = \omega_x * r_z$ et l'accélération en hauteur supplémentaire ($\Delta a_z$) est calculée d'après l'équation $\Delta a_z = \omega_x^2 * r_z$.

5.  Procédé selon l'une des revendications 2 à 4, **caractérisé en ce qu'**un mouvement de changement de direction pendant une situation de déplacement normal présente un point de rotation (4) à proximité de l'essieu arrière dont l'accélération qu'il provoque est calculée en tant que deuxième part d'accélération transversale supplémentaire ($\Delta a_{y2}$).

6.  Procédé selon la revendication 5, **caractérisé en ce que** la deuxième part d'accélération transversale supplémentaire ($\Delta a_{y2}$) est calculée d'après l'équation $\Delta a_{y2} = \omega_z * r_x$.

7.  Procédé selon l'une des revendications 1 à 6, **caractérisé en ce que** l'accélération centripète ($\frac{v^2}{r}$) est calculée d'après l'équation $\frac{v^2}{r} = v * \left( \psi \frac{n}{u} \beta \right)$.

8.  Procédé selon la revendication 7, **caractérisé en ce que** l'accélération transversale ($a_y$) actuelle est calculée d'après l'équation $a_y = \cos\alpha * v^2/r - \sin\alpha * g + \Delta a_{y1} + \Delta a_{y2}$ et l'accélération en hauteur ($a_z$) actuelle est calculée d'après l'équation $a_z = \sin\alpha * v^2/r + \cos\alpha * 9 + \Delta a_z$.

9.  Procédé selon l'une des revendications 1 à 8, **caractérisé en ce que** l'angle de roulis ($\alpha$) est estimé d'après l'équation

$$\alpha = \frac{-a_y * g + a_z * \frac{v^2}{r}}{g^2 + \left(\frac{v^2}{r}\right)^2}$$

10. Dispositif de détermination de l'angle de roulis pour des dispositifs de protection des occupants destiné à mettre en oeuvre le procédé selon l'une des revendications 1 à 9, comprenant

- un premier capteur d'accélération (10) destiné à détecter une accélération transversale ($a_y$) d'un véhicule,
- un deuxième capteur d'accélération (20) destiné à détecter une accélération en hauteur ($a_z$) du véhicule,
- au moins une autre unité de détection (30), laquelle détermine et fournit d'autres grandeurs dynamiques de déplacement, 1 lesquelles comprennent une vitesse du véhicule (v), 1 un angle de lacet ($\psi$) et un angle de flottement ($\beta$), et
- une unité d'interprétation (100) qui estime l'angle de roulis ($\alpha$) en se basant sur l'accélération transversale ($a_y$) détectée et l'accélération en hauteur ($a_z$) détectée, **caractérisé en ce que** l'unité d'interprétation (100) améliore l'estimation de l'angle de roulis en calculant une accélération centripète ($\frac{v^2}{r}$) à partir des grandeurs vitesse du véhicule (v), angle de lacet ($\psi$) et angle de flottement ($\beta$).

Figur 1

Figur 2

13

Figur 3

Figur 4

Figur 5

Figur 6

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2001044020 A
- DE 19744083 A